# EUROPEAN PATENT APPLICATION

(11) **EP 4 510 286 A1**
(43) Date of publication of application: **19.02.2025**
(21) Application number: 22955518.0
(22) Date of filing: 24.10.2022
(51) Int. Cl.: H01M 10/0587, H01M 10/04, B65H 23/195

(54) **WINDING METHOD AND WINDING SYSTEM**

(30) Priority: 16.08.2022 CN 202210981825
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: ZHANG, Xiaowei, Ningde, Fujian 352100 (CN); WEI, Hui, Ningde, Fujian 352100 (CN); WU, Xiang, Ningde, Fujian 352100 (CN); HUANG, Guoda, Ningde, Fujian 352100 (CN); WEN, Yuqian, Ningde, Fujian 352100 (CN); TANG, Minghao, Ningde, Fujian 352100 (CN); ZHANG, Shengwu, Ningde, Fujian 352100 (CN)
(74) Representative: Ran, Handong
(86) International application number: PCT/CN2022/126916
(87) International publication number: WO 2024/036746

(57) **Abstract**

The present application relates to the technical field of battery preparation, and discloses a winding method and a winding system. The method comprises: obtaining, in real time, a first parameter and a second parameter of each electrode assembly on a winding shaft, wherein the first parameter is any one of the number of winding layers, the length of a diaphragm, and the winding diameter, and the second parameter is one or both of the remaining two of the number of winding layers, the length of the diaphragm, and the winding diameter; comparing the second parameter with a corresponding preset parameter range, respectively, wherein the preset parameter range is a range of a second parameter corresponding to a first parameter of a preset standard model corresponding to the electrode assembly; and if the second parameter is out of the preset parameter range, adjusting a diaphragm to be wound of the corresponding electrode assembly. When the winding of the diaphragm to be wound is completed, the deviation of the early-stage electrode assembly can be compensated for, so that a plurality of finally completed electrode assemblies can meet standard requirements, thereby reducing the possibility of deviation of finished electrode assemblies, and improving the production efficiency.

## Description

### Cross-Reference to Related Application

The present application claims the priority of Chinese patent application no. 202210981825.0, filed on August 16, 2022 and entitled "WINDING METHOD AND WINDING SYSTEM", which is incorporated herein by reference in its entirety.

### Technical Field

The present application relates to the technical field of battery fabrication, and more particularly to a winding method and a winding system.

### Background Art

Information provided in this section is only background information related to the present application, which is not necessarily the prior art.

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In the manufacturing process of batteries, production efficiency and winding quality are extremely important for wound electrode assemblies.

### Summary

In view of the above-mentioned problems, the present application provides a winding method and a winding system, in order to achieve synchronous winding of a plurality of electrode assemblies by a winding needle, thereby improving production efficiency and ensuring the quality of the electrode assemblies.

A first aspect of the present application provides a winding method, which is used in a winding system for synchronously winding a plurality of electrode assemblies. The method includes the following steps: obtaining a first parameter and a second parameter of each electrode assembly on a winding needle in real time, wherein the first parameter is any one of the number of winding layers, a sheet length and a winding roll diameter, and the second parameter is one or both of the remaining two of the number of winding layers, the sheet length and the winding roll diameter. Comparing the second parameters respectively with corresponding preset parameter ranges, wherein the preset parameter ranges are the ranges of the second parameters corresponding to the first parameters of preset standard models corresponding to the electrode assemblies; and adjusting, in response to the second parameter exceeding the corresponding preset parameter range, sheets to be wound of the corresponding electrode assembly.

In addition, the winding method of the present application may also have the following additional technical features.

In some embodiments of the present application, the first parameter is the number of winding layers, and the second parameter is the sheet length or the winding roll diameter; alternatively, the first parameter is the sheet length, and the second parameter is the winding roll diameter or the number of winding layers. The step of adjusting, in response to the second parameter exceeding the corresponding preset parameter range, sheets to be wound of the corresponding electrode assembly includes: decreasing the output of the corresponding sheets to be wound in response to the second parameter being greater than an upper limit of the corresponding preset parameter range; and increasing output of the corresponding sheets to be wound in response to the second parameter being less than a lower limit of the corresponding preset parameter range. During the winding, by taking the number of winding layers as a reference, it is determined whether the sheet length or the winding roll diameter exceeds the corresponding preset parameter range; alternatively, taking the sheet length as a reference, it is determined whether the number of winding layers or the winding roll diameter in a current state exceeds the corresponding preset parameter range. When abnormal winding occurs on the electrode assemblies, the abnormality can be identified in a timely manner, and output of the corresponding sheets to be wound is increased or decreased accordingly, such that the finally obtained electrode assemblies can meet the standard requirements, and the possibility of the finished electrode assemblies having deviations can be reduced.

In some embodiments of the present application, the first parameter is the winding parameter, and the second parameter is the sheet length or the number of winding layers. The step of adjusting, in response to the second parameter exceeding the corresponding preset parameter range, sheets to be wound of the corresponding electrode assembly includes: increasing output of the corresponding sheets to be wound in response to the second parameter being greater than an upper limit of the corresponding preset parameter range; and decreasing output of the corresponding sheets to be wound in response to the second parameter being less than a lower limit of the corresponding preset parameter range. During the winding, taking the winding parameter as a reference, it is determined whether the number of winding layers or the sheet length in the current state exceeds the corresponding preset parameter range. When abnormal winding occurs on the electrode assemblies, the abnormality can be identified in a timely manner, and output of the corresponding sheets to be wound is increased or decreased accordingly, such that the finally obtained electrode assemblies can meet the standard requirements, and the possibility of the finished electrode assemblies having deviations can be reduced.

In some embodiments of the present application, decreasing output of the corresponding sheets to be wound includes: increasing tensions of the sheets to be wound. By increasing the tensions of the sheets to be wound, the purpose of decreasing the output of the sheets to be wound is achieved, so that the adjustment is convenient, and the controllability is high.

In some embodiments of the present application, increasing output of the corresponding sheets to be wound includes: decreasing tensions of the sheets to be wound. By decreasing the tensions of the sheets to be wound, the purpose of increasing the output of the sheets to be wound is achieved, so that the adjustment is convenient, and the controllability is high.

In some embodiments of the present application, increasing output of the corresponding sheets to be wound includes: rolling the sheets to be wound to form protrusions, or increasing the height of the protrusions formed by rolling the sheets to be wound. By rolling the sheets to be wound to form the protrusions or increasing the height of the protrusions formed by rolling the sheets to be wound, the purpose of increasing the output of the sheets to be wound is achieved, so that the winding method is relatively easy to implement and high in controllability.

In some embodiments of the present application, optionally, the winding method further includes establishing a preset standard model. Specifically, establishing a preset standard model includes: simulating the winding of a sheet having a standard thickness, setting a preset parameter range and generating the preset standard model, wherein the preset parameter range is set according to the second parameter corresponding to the first parameter during the winding of the sheet having a standard thickness. By simulating the winding of the sheet having a standard thickness and generating the preset standard model, the electrode assemblies can be regulated and managed according to the preset standard model during the winding to improve parameter fluctuation during the winding of the electrode assemblies, thereby improving the quality of the finished electrode assemblies and the safety of batteries composed of the electrode assemblies.

In some embodiments of the present application, the plurality of electrode assemblies are all of the same model, and the plurality of electrode assemblies correspond to one and the same preset standard model; alternatively, the plurality of electrode assemblies include at least two models of electrode assemblies, the electrode assemblies of the same model correspond to the same preset standard model, and the number of preset standard models is equal to the number of the models of the electrode assemblies. By adopting the same preset standard model for the electrode assemblies of the same model, the consistency of finished products after the winding of the plurality of electrode assemblies of the same model is completed can be ensured.

A second aspect of the present application provides a winding system, including: an unwinding mechanism, a winding needle, a plurality of adjustment mechanisms, a detection mechanism and a controller. The unwinding mechanism is configured to unwind sheets of a plurality of electrode assemblies. The winding needle is provided with a plurality of winding positions at intervals in an axial direction, and each winding position is configured to wind an electrode assembly. The adjustment mechanisms are provided between the unwinding mechanism and the winding needle, and the plurality of adjustment mechanisms are provided corresponding to the sheets of the plurality of electrode assemblies. The detection mechanism is configured to detect winding information of each electrode assembly during the winding. The winding information includes a first parameter and a second parameter. The first parameter is any one of the number of winding layers, a sheet length and a winding roll diameter, and the second parameter is one or both of the remaining two of the number of winding layers, the sheet length and the winding roll diameter. The controller is configured to receive the winding information, and to drive, according to the second parameter, the adjusting mechanisms to adjust the sheets to be wound of the corresponding electrode assemblies.

According to the winding system of the present application, during the winding, the detection mechanism obtains the first parameter and the second parameter of each electrode assembly in real time, and the controller calls a preset parameter range of the second parameter of the corresponding preset standard model on the basis of the first parameter, and compares the obtained second parameter with a preset parameter range of the corresponding preset standard model, such that the electrode assembly whose second parameter exceeds the corresponding preset parameter range can be identified in a timely manner. When the second parameter of the electrode assembly exceeds the corresponding preset parameter range, the controller drives the adjustment mechanism to adjust the sheets to be wound of the corresponding electrode assembly, such that after subsequent winding of the sheets to be wound is completed, compensation can be performed for the deviation of the previously wound electrode assemblies, enabling all the finally obtained electrode assemblies to meet the standard requirements, and the same winding needle can also simultaneously wind the plurality of electrode assemblies, thereby not only ensuring the quality of the electrode assemblies, but also improving production efficiency.

In addition, the winding system according to the present application may also have the following additional technical features.

In some embodiments of the present application, the adjustment mechanism includes a tension adjustment device for adjusting tension of the sheets to be wound. By providing the tension adjustment device, the tension of the corresponding sheets to be wound can be adjusted to achieve the purpose of adjusting the corresponding sheets to be wound, so that the controllability is high, and the operation is convenient.

In some embodiments of the present application, the sheets of the electrode assembly include a positive electrode, an negative electrode, and a separator sheet, and the adjustment mechanism includes a positive pole tension adjustment device, an negative pole tension adjustment device, or a separator tension adjustment device.

In some embodiments of the present application, the adjustment mechanism includes a pressing roller and a driving device, wherein a protruding portion is formed on a surface of the pressing roller and is configured to roll the corresponding sheets to be wound so as to form a protrusion, and the driving device is configured to adjust the pressing roller to get close to or away from the corresponding sheets to be wound. By means of the cooperation of the driving devices and the pressing rollers, it is possible to form the protrusions on the sheets to be wound or change the height of the protrusions on the sheets to be wound, so that the purpose of adjusting the sheets to be wound is achieved, the controllability is high, and the operation is convenient.

In some embodiments of the present application, the unwinding mechanism includes: a positive pole unwinding mechanism, a negative pole unwinding mechanism and a plurality of separator unwinding mechanisms, wherein the positive pole unwinding mechanism is provided with a positive pole unwinding shaft, and the positive pole unwinding shaft is configured to synchronously unwind positive electrodes corresponding to the plurality of electrode assemblies. The negative pole unwinding mechanism is provided with a negative pole unwinding shaft, and the negative pole unwinding shaft is configured to synchronously unwind negative electrodes corresponding to the plurality of electrode assemblies. The separator unwinding mechanisms are each provided with a separator unwinding shaft, and the two corresponding separator sheets of each electrode assembly are each correspondingly provided with a separator unwinding mechanism. The positive electrodes of the plurality of electrode assemblies are unwound by the same positive pole unwinding mechanism, and the negative electrodes of the plurality of electrode assemblies are unwound by the same negative pole unwinding mechanism, so that the equipment investment costs are reduced; also, the two separator sheets of each electrode assembly are each unwound by the separate separator unwinding mechanism, so that the operation is highly controllable.

The present application has the following beneficial effects.

According to the winding method of the present application, during the winding, the first parameter and the second parameter of each electrode assembly are obtained in real time, the preset parameter range of the second parameter of the corresponding preset standard model is called on the basis of the first parameter, and the obtained second parameter is compared with the preset parameter range of the corresponding preset standard model, such that the electrode assembly whose second parameter exceeds the corresponding preset parameter range can be identified in the timely manner. When the second parameter of the electrode assembly exceeds the corresponding preset parameter range, the sheets to be wound of the corresponding electrode assembly are adjusted, such that after subsequent winding of the sheets to be wound is completed, compensation can be performed for the deviation of the previously wound electrode assemblies, enabling all the finally obtained electrode assemblies to meet the standard requirements, and the same winding needle can also simultaneously wind the plurality of electrode assemblies, thereby not only ensuring the quality of the electrode assemblies, but also improving production efficiency.

The winding system provided by the present application is the same as the winding method provided by the present application, the winding system and the winding method can realize synchronous winding of the plurality of electrode assemblies by using the same winding needle, so that the quality of the electrode assemblies can be ensured, and the production efficiency can also be improved.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, the same reference numerals represent the same components throughout the accompanying drawings. In the drawings:
Fig. 1 is a flow chart of a winding method according to some embodiments of the present application;
Fig. 2 is a schematic diagram of a winding system that winds a plurality of electrode assemblies synchronously according to some embodiments of the present application;
Fig. 3 is a schematic diagram of a winding system according to some embodiments of the present application;
Fig. 4 is a schematic diagram of a winding system according to other embodiments of the present application; and
Fig. 5 is a flow chart of a winding method according to some embodiments of the present application.

### List of reference numerals:

100 - Winding needle; 101 - First electrode assembly; 102 - Second electrode assembly; 103 - N^{th} electrode assembly; 200 - Detection mechanism; 310 - Positive pole unwinding mechanism; 320 - Negative pole unwinding mechanism; 330 - First separator unwinding mechanism; 340 - Second separator unwinding mechanism; 350 - Third separator unwinding mechanism; 360 - Fourth separator unwinding mechanism; 410 - First positive pole tension adjustment device; 420 - First negative pole tension adjustment device; 430 - First separator tension adjustment device; 440 - Second separator tension adjustment device; 450 - Third separator tension adjustment device; 460 - Fourth separator tension adjustment device; 470 - Pressing roller; 480 - Second positive pole tension adjustment device; 490 - Second negative pole tension adjustment device; 501 - First separator sheet; 502 - Second separator sheet; 503 - Third separator sheet; 504 - Fourth separator sheet; 506 - First positive electrode; 507 - Second positive electrode; 508 - First negative electrode; and 509 - Second negative electrode.

### Detailed Description of Embodiments

The following will describe exemplary embodiments of the present application in more detail with reference to the accompanying drawings. Although the exemplary embodiments of the present application are shown in the accompanying drawings, it should be understood that the present application may be implemented in various forms and should not be limited by the embodiments set forth herein. On the contrary, the embodiments are provided to enable a more thorough understanding of the present application and completely convey the scope of the present application to a person skilled in the art.

It should be understood that the terms used herein are merely for the purpose of describing specific embodiments and are not intended to limit the present application. Unless otherwise clearly indicated in the context, the singular expressions "a", "an", and "the" as used herein may also include a plural expression. The terms "comprise", "composed of", "include" and "having" are inclusive, when used in this specification, and therefore specify the existence of described features, steps, operations, elements, and/or components, but do not exclude the existence or addition of one or more other features, steps, operations, elements, components, and/or groups thereof. The method steps, processes, and operations described herein are not to be construed as necessarily requiring their performance in a particular order described or illustrated, unless an order of performance is clearly indicated. It should also be understood that additional or alternative steps may be used.

Although the terms such as first, second and third may be used herein to describe a plurality of elements, components, regions, layers and/or sections, these elements, components, regions, layers and/or sections should not be limited by these terms. These terms are merely used to distinguish one element, component, region, layer or section from the other region, layer or section. Unless clearly indicated by the context, terms such as "first" and "second" and other numerical terms do not imply a sequence or order when used herein. Therefore, a first element, component, region, layer or section discussed below may be referred to as a second element, component, region, layer or section without departing from the teaching of the embodiments.

For ease of description, spatially relative terms such as "inside", "outside", "inner side", "outer side", "below", "beneath", "above" and "over" may be used herein to describe a relationship between one element or feature and another element(s) or feature(s) as illustrated in the figures. These spatially relative terms are intended to cover different orientations of a device in use or operation in addition to the orientations depicted in the figures. For example, if the device in the figures is turned over, an element described as being "beneath other elements or features" or "under other elements or features" will be oriented later as being "over other elements or features" or "above other elements or features". Thus, the exemplary terms "below" may cover the orientations "above" and "beneath". The device may be oriented in other ways (rotated by 90 degrees or in other orientations), and the spatially relative relationship descriptors used herein may be interpreted correspondingly.

Lithium batteries have the advantages of high energy density, high safety, long service life, environmental friendliness to the social environment etc., and are widely used in passenger vehicles, commercial vehicles, electric bicycles, heavy trucks, energy storage facilities, battery swap stations, engineering manufacturing, intelligent apparatuses etc., and meanwhile promote technological development and research in communication terminals, medical devices, energy development and other aspects.

At present, in the production and manufacturing of the lithium batteries, prismatic or cylindrical lithium-ion batteries are generally manufactured by using a winding method. A conventional winding method is a method of winding a single electrode assembly with a winding needle, and has low production efficiency. In case of the low production efficiency of the current winding method, the inventors of the present application hoped to develop a method of simultaneously winding a plurality of electrode assemblies with one winding needle, which has the advantage of high winding efficiency. However, in actual experiments, the inventors of the present application found that due to the influence of fluctuations such as differences in sheet thickness, when the plurality of electrode assemblies are wound synchronously, there are differences in the winding roll diameter and length of the plurality of electrode assemblies, which will easily lead to that tensions and deviation correction cannot be synchronized, eventually causing scrapping of the electrode assemblies.

In order to solve the above problems, after in-depth research, the inventors of the present application provide a winding method. The method includes: obtaining a first parameter and a second parameter of each electrode assembly on a winding needle in real time, comparing the second parameter with a corresponding preset parameter range, and adjusting, in response to the second parameter exceeding the corresponding preset parameter range, sheets to be wound of the corresponding electrode assembly.

The first parameter is any one of the number of winding layers, a sheet length and a winding roll diameter, the second parameter is one or both of the remaining two of the number of winding layers, the sheet length and the winding roll diameter, and the preset parameter range is a range of the second parameter corresponding to the first parameter of a preset standard model corresponding to the electrode assembly.

During the winding, the winding roll diameter, the sheet length and the number of winding layers of a plurality of electrode assemblies are monitored in real time, and by taking one of the winding roll diameter, the sheet length and the number of winding layers as a reference standard, and one or both of the other two as comparison values, the sheets to be wound are adaptively adjusted when the comparison value of a current state of the electrode assembly exceeds a preset parameter range of the comparison value corresponding to the reference standard. In this way, after the winding of the sheets to be wound is completed, compensation can be performed for the deviation of the electrode assemblies wound previously, such that the plurality of finally obtained electrode assemblies can all meet the standard requirements, reducing the possibility of deviations of the electrode assemblies, and enabling the method of winding a plurality of electrode assemblies with the same needle to be popularized and applied in actual production.

Also, when the plurality of electrode assemblies are of the same model, the winding method disclosed in the present application may compensate for deviations such as the sheet thickness of the plurality of electrode assemblies wound around the same winding needle, such that when the plurality of electrode assemblies are wound, the winding roll diameter and winding length are kept consistent as much as possible, thus making it possible that the plurality of electrode assemblies are wound with the same winding needle, ensuring the alignment, winding roll diameter and other winding features of the plurality of electrode assemblies while improving the winding efficiency, and simultaneously improving the winding output rate and use safety performance.

The winding method disclosed in the embodiments of the present application may be used in, but is not limited to, a winding process of the electrode assemblies for prismatic batteries, cylindrical batteries, etc. Battery cells fabricated from the electrode assemblies produced using the winding method disclosed in the embodiments of the present application may be used in various electrical devices, including but not limited to vehicles, ships, or aircraft.

The battery cell refers to the smallest constitutional unit of a battery. The battery cell includes a housing structure, an electrode assembly and other functional components, wherein the housing structure includes an end cap and a housing.

The end cap refers to a component that covers an opening of the housing to isolate an internal environment of the battery cell from an external environment. The housing is an assembly that is configured to fit with the end cap so as to create the internal environment of the battery cell, wherein the created internal environment may be used for accommodating the electrode assembly, an electrolyte and other components.

The electrode assembly is a component where an electrochemical reaction occurs in the battery cell. The housing may include one or more electrode assemblies therein. The electrode assembly is mainly formed by winding a positive electrode and an negative electrode, and separator sheets are provided between the positive electrode and the negative electrode. Generally, two layers of separator sheets are provided in one electrode assembly to isolate the positive electrode from the negative electrode. The positive electrode includes a positive conductive current collector and a positive active material layer. A surface of the positive conductive current collector is coated with the positive active material layer. Taking a lithium-ion battery as an example, the positive conductive current collector may be made of aluminum, and the positive active material layer includes a positive active material which may be lithium cobalt oxide, lithium iron phosphate, ternary lithium, lithium manganate, etc. The negative electrode includes a negative conductive current collector and a negative active material layer. A surface of the negative conductive current collector is coated with the negative active material layer. The negative conductive current collector may be made of copper, and the negative active material layer includes a negative active material which may be carbon, silicon, etc. The separator sheet may be made of polypropylene (PP), or polyethylene (PE), etc. The positive conductive current collector and the negative conductive current collector also have parts that are not coated with the active materials, and these parts without the active materials each constitute tabs or are configured to connect the tabs. A positive electrode tab and an negative electrode tab may be jointly located at one end of a main body portion together or at two ends of the main body portion respectively. During the charging and discharging of the battery, a positive active material and a negative active material react with the electrolyte, and the tabs are connected to electrode terminals to form a current loop.

Since the electrode assembly is formed by winding the positive electrode, the negative electrode and the separator sheet, the sheets involved in the winding method disclosed in the embodiments of the present application generally include a positive electrode, an negative electrode and/or a separator sheet. The positive electrode and the negative electrode are subjected to a winding process by means of a series of working procedures such as stirring, coating, rolling, die-cutting and slitting. Corresponding unwinding mechanisms, a winding mechanism, adjustment mechanisms, a detection mechanism and a controller are provided in the winding process.

The working procedures such as stirring, coating, rolling, die-cutting and slitting are intended to process raw materials of the positive electrode or the negative electrode so as to obtain the positive electrode and the negative electrode. After these working procedures are completed, generally, the positive electrode is wound to form a positive electrode roll, and the negative electrode is wound to form an negative electrode roll. The winding process is a process of jointly winding the processed positive electrode, negative electrode and separator sheet so as to form an electrode assembly.

The unwinding mechanism is a mechanism for releasing the positive electrode, the negative electrode or the separator sheet. In the winding process, the positive electrode used is placed on the unwinding mechanism in the form of the positive electrode roll, and the unwinding mechanism continuously releases the positive electrode as the winding mechanism winds the electrode plate. Similarly, in the winding process, the negative electrode used is placed on the unwinding mechanism in the form of the negative electrode roll, and the unwinding mechanism continuously releases the negative electrode as the winding mechanism winds the electrode plate. In the winding process, the separator sheet used is placed on the unwinding mechanism in the form of a separator sheet roll, and the unwinding mechanism continuously releases the separator sheet as the winding mechanism winds the electrode plate.

The winding mechanism is an apparatus configured to complete the winding of a positive electrode, an negative electrode and a separator sheet to form an electrode assembly. The winding mechanism is provided with a winding needle, which is a component configured to wind an electrode assembly. When in use, the winding needle is mounted on a winding shaft of the winding mechanism, and the winding needle and the winding shaft are provided coaxially; when the winding mechanism is started, the winding shaft rotates under the action of an electric motor of the winding mechanism to drive the winding needle to rotate, and then winds the positive electrode, the negative electrode and the separator sheet together to form an electrode assembly that may be packaged.

The adjustment mechanism is an apparatus configured to transfer the positive electrode, the negative electrode or the separator sheet released by the unwinding mechanism to the winding mechanism. Generally, the positive electrode, the negative electrode and the two separator sheets are respectively provided with corresponding adjustment mechanisms. The adjustment mechanism typically includes a guide roller device and a tension adjustment device arranged in sequence in a conveying direction. The guide roller device is provided with a plurality of guide rollers thereon, and the tension adjustment device is provided with a tension roller set thereon. The guide rollers are configured to support and deliver the corresponding positive electrodes, negative electrodes or separator sheets, and enable these sheets to be aligned well during transfer. The tension roller set is a special guide roller set. The tension roller set typically includes three or more rollers. At least one roller is movable relative to other rollers (non-movable rollers may be referred to as fixed rollers) to change tension of the sheet transferred by the roller. The movable roller may be a slidable tension roller set, or a swingable tension roller set, etc. The tension of the sheet may be detected by a tension sensor, and the movement of the movable roller in the tension roller set may be driven by a driving mechanism connected to the movable roller, and the driving mechanism may be an electric motor cooperating with a corresponding transmission mechanism.

The adjustment mechanism may further optionally include a pressing roller and a driving device, and a protruding portion is formed on a surface of the pressing roller. The pressing roller is generally provided corresponding to the positive electrode, and is configured to roll the positive electrode so as to form a protrusion on the positive electrode, thereby controlling a layer spacing of the electrode assemblies formed by winding. Typically, a pair of pressing rollers coaxially provided and independently controlled is provided. When the pressing rollers have different pressures, protrusions having different depths may be pressed on the positive electrode. Generally, the greater the pressures, the higher the protrusions of the corresponding positive electrode, the greater the thickness of the corresponding positive electrode reaching the winding mechanism, and the larger the layer spacing of the electrode assemblies formed by winding; the smaller the pressures, the lower the protrusions of the corresponding positive electrode, and the smaller the thickness of the corresponding positive electrode reaching the winding mechanism. The pressure of the pressing roller may be detected by a pressure sensor, and the pressure of the pressing roller may be changed by the driving device driving the pressing roller to move, and the driving device may be an electric motor cooperating with a corresponding transmission mechanism.

The controller is an electronic device capable of receiving signals, sending signals and performing multiple functions such as data calculation and signal conversion, which may be a computer, an industrial programmable logic controller (PLC for short), etc. The controller is configured to intelligently coordinate all steps of the winding process.

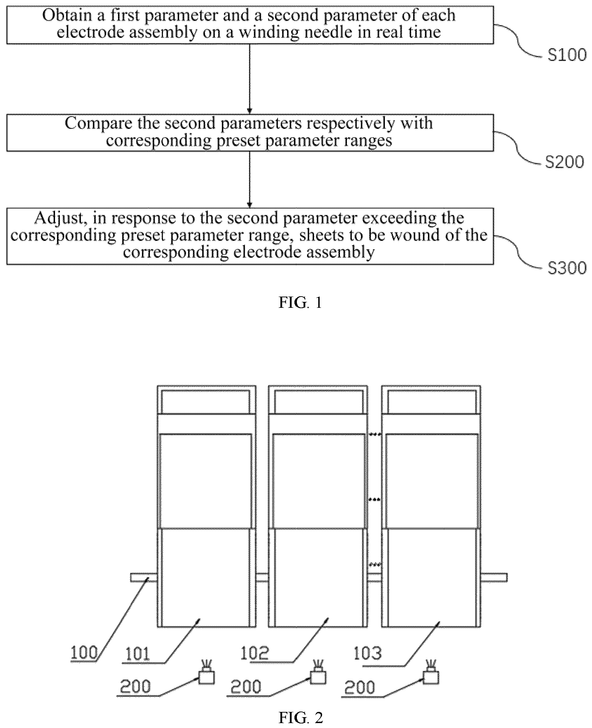

According to some embodiments of the present application, referring to Fig. 1, Fig. 1 shows a flow chart of a winding method in some embodiments of the present application. The present application provides a winding method, which is used in a winding system for synchronously winding a plurality of electrode assemblies, and the method is mainly executed coordinately by the controller. The winding method includes the following steps S100-S300.

At step S100, a first parameter and a second parameter of each electrode assembly on a winding needle are obtained in real time. The first parameter is any one of the number of winding layers, a sheet length and a winding roll diameter, and the second parameter is one or both of the remaining two of the number of winding layers, the sheet length and the winding roll diameter.

A sheet refers to a positive electrode, an negative electrode and/or a separator sheet forming the electrode assembly.

Real time refers to any moment in the winding process of the electrode assembly. The winding process of the electrode assembly generally refers to the process in which the winding needle starts to rotate, winding the sheet until the winding needle stops rotating to complete the entire winding of the electrode assembly. Therefore, obtaining the first parameter and the second parameter of each electrode assembly on the winding needle in real time refers to continuously obtaining the first parameter and the second parameter of each electrode assembly during the entire winding process of the electrode assembly.

The number of winding layers refers to the number of turns of the electrode assemblies. Typically, every rotation of the winding needle by 360 degrees, that is, one turn, and the number of winding layers increases by one layer. Therefore, the number of winding layers of the electrode assemblies may be calculated separately on the basis of the number of layers of positive electrodes in a radial direction of the electrode assemblies, or on the basis of the number of layers of negative electrodes in the radial direction of the electrode assemblies. The number of winding layers may be calculated by the controller obtaining detection information of an encoder on the winding shaft of the winding mechanism. That is to say, the encoder on the winding shaft of the winding mechanism detects rotation turn number information of the winding shaft (that is, the winding needle), and the controller receives the rotation turn number information detected by the encoder and calculates and analyzes the number of rotation turns corresponding to the rotation turn number information, wherein the number of rotation turns is the number of winding layers.

The sheet length refers to the total sheet length when the electrode assembly is wound to a current state, that is, the length of the unwound electrode assembly in the current state. For the length, the length of the positive electrode or the negative electrode, or the length of the separator sheet may be taken as a reference. The sheet length may be calculated by converting the detection information of the encoder on the guide roller. For example, the length of the positive electrode is taken as a reference for the sheet length. In this case, an encoder may be provided on the guide roller close to the winding mechanism that transfers the positive electrode, the positive electrode bypasses the guide roller during transferring, the number of rotation turns of the guide roller is recorded by the encoder, and the length of the positive electrode may be calculated on the basis of the number of rotation turns and the radius or diameter of the guide roller.

The winding roll diameter refers to the diameter of the electrode assembly when the electrode assembly is wound to the current state, that is, the diameter corresponding to the outermost sheet of the electrode assembly in the current state. A method for detecting the winding roll diameter of each electrode assembly may be implemented by using a CCD vision sensor (the CCD vision sensor is a charge-coupled device sensor) and a high-precision displacement sensor to detect the electrode assembly, or by obtaining the winding angular velocity and the linear velocity of the electrode assembly and then performing calculation by a software program on the basis of a relationship of the angular velocity, the linear velocity and the diameter.

At step S200, the second parameters are respectively compared with corresponding preset parameter ranges. The preset parameter ranges are the ranges of the second parameters corresponding to the first parameters of preset standard models corresponding to the electrode assemblies.

The preset standard models are ideal standard electrode assembly models constructed on the basis of standard sheet thickness specifications for the models of the electrode assemblies on the winding needle, and the preset standard models each include a corresponding standard second parameter range in any state of the first parameter; by taking the first parameter as the number of winding layers as an example, the preset standard model includes the sheet length or the winding roll diameter formed after all layers of sheets are wound, and is configured for comparison in actual production.

The preset parameter range should correspond to the second parameter, for example, when the second parameter is the number of winding layers, the preset parameter range corresponds to a numerical range of the number of winding layers; when the second parameter is the sheet length, the preset parameter range corresponds to a numerical range of the sheet length; when the second parameter is the winding roll diameter, the preset parameter range corresponds to a numerical range of the winding roll diameter. When the second parameters are the sheet length and the winding roll diameter, the preset parameter ranges include the numerical range of the corresponding sheet length and the numerical range of the corresponding winding roll diameter. During the comparison, the sheet length in the current state is compared with the numerical range of the sheet length, and the winding roll diameter in the current state is compared with the numerical range of the winding roll diameter.

It should be noted that comparing the second parameter with the corresponding preset parameter range is comparing the obtained second parameter of each electrode assembly with the corresponding preset parameter range of the electrode assembly. If the plurality of electrode assemblies are of the same model, in case of the second parameters being the same, the corresponding preset parameter ranges are the same; if the plurality of electrode assemblies are of different models, the obtained second parameters are different in most cases, and the corresponding preset parameter ranges are also different.

At step S300, in response to the second parameter exceeding the corresponding preset parameter range, sheets to be wound of the corresponding electrode assembly are adjusted.

The sheets to be wound are located on the positive electrode, the negative electrode and/or the separator sheet located between the unwinding mechanism and the winding mechanism.

It should be noted that during the adjustment of the sheets to be wound of the corresponding electrode assemblies, the corresponding electrode assemblies are the electrode assemblies whose second parameter ranges exceed the preset parameter ranges, that is, step S300 is adjusting the corresponding sheets to be wound of the electrode assemblies whose second parameters exceed the preset parameter ranges. Adjusting the sheets to be wound of the corresponding electrode assemblies is intended to adjust the sheets to be wound and compensate for the second parameters of the previously wound electrode assemblies after the winding of the sheets to be wound is completed, such that the second parameters of the finally obtained electrode assemblies are within the preset parameter ranges.

According to the winding method of the present application, during the winding, the first parameter and the second parameter of each electrode assembly are obtained in real time, the preset parameter range of the second parameter of the corresponding preset standard model is called on the basis of the first parameter, and the obtained second parameter is compared with the preset parameter range of the corresponding preset standard model, such that the electrode assembly whose second parameter exceeds the corresponding preset parameter range can be identified in the timely manner. When the second parameter of the electrode assembly exceeds the corresponding preset parameter range, the sheets to be wound of the corresponding electrode assembly are adjusted, such that after subsequent winding of the sheets to be wound is completed, compensation can be performed for the deviation of the previously wound electrode assemblies, enabling all the finally obtained electrode assemblies to meet the standard requirements, and the same winding needle can also simultaneously wind the plurality of electrode assemblies, thereby not only ensuring the quality of the electrode assemblies, but also improving production efficiency.

According to some embodiments of the present application, optionally, when the first parameter is the number of winding layers and the second parameter is the sheet length or the winding roll diameter, or the first parameter is the sheet length and the second parameter is the winding roll diameter or the number of winding layers. The step S300 of adjusting, in response to the second parameter exceeding the corresponding preset parameter range, sheets to be wound of the corresponding electrode assembly includes: decreasing the output of the corresponding sheets to be wound in response to the second parameter being greater than an upper limit of the corresponding preset parameter range; and increasing output of the corresponding sheets to be wound in response to the second parameter being less than a lower limit of the corresponding preset parameter range.

When the first parameter is the number of winding layers and the second parameter is the sheet length or the winding parameter, the corresponding preset parameter range is a preset sheet length range or a preset winding roll diameter range, corresponding to the number of winding layers in the current state, of the preset standard model of the corresponding one in the plurality of electrode assemblies. The first parameter is the sheet length, the second parameter is the winding parameter or the number of winding layers, and the corresponding preset parameter range is a preset winding parameter range or a preset winding layer number range, corresponding to the sheet length in the current state, of the preset standard model of the corresponding one in the plurality of electrode assemblies.

The upper limit of the preset parameter range is also a maximum value of the preset parameter range, and the lower limit of the preset parameter range is also a minimum value of the preset parameter range. Taking the second parameter being the sheet length as an example, an upper limit value of the preset parameter range is a maximum value of the corresponding preset sheet length range, and a lower limit value of the preset parameter range is a minimum value of the corresponding preset sheet length range.

The output of the sheets is the required length and/or thickness of the sheets every time the first parameters increase per unit during the winding of the electrode assemblies. Decreasing the output of the corresponding sheets to be wound may be implemented by increasing tension of the current sheets to be wound and/or decreasing a pressure of the pressing roller. Increasing the output of the corresponding sheets to be wound may be implemented by decreasing the tension of the current sheets to be wound and/or increasing the pressure of the pressing roller.

When the first parameter is the number of winding layers and the second parameter is the sheet length or the winding roll diameter, the output of the sheets is the length and thickness of the sheets required to form a layer of electrode assemblies. Decreasing the output of the corresponding sheets to be wound refers to outputting the adjusted sheets to be wound with a smaller length or thickness than that of the sheets to be wound before adjustment, under the condition of forming the same layer of the electrode assembly. After decreasing the output of the corresponding sheets to be wound, in the case of the same number of winding layers of electrode assembly, the sheet length of the electrode assembly formed by winding the adjusted sheets to be wound is less than the sheet length of the electrode assembly formed by winding the sheets to be wound before adjustment, and the winding roll diameter of the electrode assembly formed by winding the adjusted sheets to be wound is less than the winding roll diameter of the electrode assembly formed by winding the sheets to be wound before adjustment. Increasing the output of the corresponding sheets to be wound refers to outputting the adjusted sheets to be wound with a greater length or thickness than that of the sheets to be wound before adjustment, under the condition of forming the same layer of the electrode assembly. After increasing the output of the corresponding sheets to be wound, in the case of the same number of winding layers of electrode assemblies, the sheet length of the electrode assemblies formed by winding the adjusted sheets to be wound is greater than the sheet length of the electrode assemblies formed by winding the sheets to be wound before adjustment, and the winding roll diameter of the electrode assemblies formed by winding the adjusted sheets to be wound is greater than the winding roll diameter of the electrode assemblies formed by winding the sheets to be wound before adjustment.

During the winding, the sheet length or winding roll diameter of any number of winding layers of electrode assemblies wound is obtained in real time, that is, the electrode assemblies are detected every time one turn of electrode assemblies is completed, and by taking the number of winding layers as the reference, it is determined in a timely manner whether the sheet length or the winding roll diameter in the current state exceeds the preset sheet length range and the preset winding roll diameter range. When the sheet length or the winding roll diameter of the electrode assemblies in the current state exceeds the preset sheet length range and the preset winding roll diameter range, the adjustment mechanism for the electrode assemblies is controlled to adjust the output of the sheets to be wound, enabling the compensation to be performed for the deviation of the electrode assemblies wound previously, such that a plurality of electrode assemblies finally obtained can meet the standard requirements, and the possibility of deviation of the electrode assemblies is reduced.

When the first parameter is the sheet length and the second parameter is the winding roll diameter or the number of winding layers, the output of the sheets is the required sheet length and sheet thickness when the electrode assemblies are wound per unit sheet length. Decreasing output of the corresponding sheets to be wound refers to outputting the adjusted sheets to be wound, which have a smaller length or thickness than that of the sheets to be wound before adjustment, under the condition of the same sheet length of the formed electrode assemblies. After decreasing the output of the corresponding sheets to be wound, in the case of the same sheet length of electrode assemblies, the winding roll diameter of the electrode assemblies formed by winding the adjusted sheets to be wound is less than the winding roll diameter of the electrode assemblies formed by winding the sheets to be wound before adjustment, and the number of winding layers of the electrode assemblies formed by winding the adjusted sheets to be wound is less than the number of winding layers of the electrode assemblies formed by winding the sheets to be wound before adjustment. Increasing output of the corresponding sheets to be wound refers to outputting the adjusted sheets to be wound, which have a greater length or thickness than that of the sheets to be wound before adjustment, under the condition of the same sheet length of the formed electrode assemblies. After increasing the output of the corresponding sheets to be wound, in the case of increasing the same sheet length of electrode assemblies, the winding roll diameter of the electrode assemblies formed by winding the adjusted sheets to be wound is greater than the winding roll diameter of the electrode assemblies formed by winding the sheets to be wound before adjustment, and the number of winding layers of the electrode assemblies formed by winding the adjusted sheets to be wound is greater than the number of winding layers of the electrode assemblies formed by winding the sheets to be wound before adjustment.

By taking the sheet length as the reference during the winding process, it is determined in a timely manner whether the number of winding layers or the winding roll diameter in the current state exceeds the preset winding layer number range and the preset winding roll diameter range. When the number of winding layers or the winding roll diameter of the electrode assemblies in the current state exceeds the preset sheet length range and the preset winding roll diameter range, the adjustment mechanism for the electrode assemblies is controlled to adjust the output of the sheets to be wound, enabling compensation to be performed for the deviation of the electrode assemblies wound previously, such that a plurality of electrode assemblies finally obtained can meet the standard requirements, and the possibility of deviation of the electrode assemblies is reduced.

According to some embodiments of the present application, optionally, the first parameter is the winding parameter, and the second parameter is the sheet length or the number of winding layers. The step S300 of adjusting, in response to the second parameter exceeding the corresponding preset parameter range, sheets to be wound of the corresponding electrode assembly includes: increasing output of the corresponding sheets to be wound in response to the second parameter being greater than an upper limit of the corresponding preset parameter range; and decreasing output of the corresponding sheets to be wound in response to the second parameter being less than a lower limit of the corresponding preset parameter range.

When the first parameter is the winding roll diameter and the second parameter is the sheet length or the number of winding layers, the corresponding preset parameter range is a preset sheet length range or a preset winding layer number range, corresponding to the winding roll diameter in the current state, of the preset standard model of the corresponding one in the plurality of electrode assemblies.

In this embodiment, the first parameter is the winding roll diameter, and the second parameter is the sheet length or the number of winding layers, so the output of the sheets is the required sheet length and sheet thickness when the winding roll diameter increases by a unit thickness during the winding of the electrode assemblies. Decreasing output of the corresponding sheets to be wound refers to outputting the adjusted sheets to be wound, which have a smaller length or thickness than that of the sheets to be wound before adjustment, under the condition of the same winding roll diameter of formed electrode assemblies. After decreasing the output of the corresponding sheets to be wound, in the case of increasing the same winding roll diameter of the electrode assemblies, the sheet length of the electrode assemblies formed by winding the adjusted sheets to be wound is less than the sheet length of the electrode assemblies formed by winding the sheets to be wound before adjustment, and the number of winding layers of the electrode assemblies formed by winding the adjusted sheets to be wound is less than the number of winding layers of the electrode assemblies formed by winding the sheets to be wound before adjustment. Increasing output of the corresponding sheets to be wound refers to outputting the adjusted sheets to be wound, which have a greater length or thickness than that of the sheets to be wound before adjustment, under the condition of the same winding roll diameter of the formed electrode assemblies. After increasing the output of the corresponding sheets to be wound, in the case of increasing the same winding roll diameter of the electrode assemblies, the sheet length of the electrode assemblies formed by winding the adjusted sheets to be wound is greater than the sheet length of the electrode assemblies formed by winding the sheets to be wound before adjustment, and the number of winding layers of the electrode assemblies formed by winding the adjusted sheets to be wound is greater than the number of winding layers of the electrode assemblies formed by winding the sheets to be wound before adjustment.

During the winding process, by taking the winding roll diameter as the reference, it is determined in a timely manner whether the number of winding layers or the sheet length in the current state exceeds the preset winding layer number range and the preset sheet length range. When the number of winding layers or the sheet length of the electrode assemblies in the current state exceeds the preset sheet length range and the preset sheet length range, the adjustment mechanism for the electrode assemblies is controlled to adjust the output of the sheets to be wound, enabling compensation to be performed for the deviation of the electrode assemblies wound previously, such that a plurality of electrode assemblies finally obtained can meet the standard requirements, and the possibility of deviation of the electrode assemblies is reduced.

According to some embodiments of the present application, optionally, decreasing output of the corresponding sheets to be wound includes: increasing tensions of the sheets to be wound.

The tensions of the sheets to be wound is related to the tensioning degrees of the sheets to be wound on the adjustment mechanism, and the tensioning degrees of the sheets to be wound may be adjusted by controlling tension adjustment devices of the adjustment mechanism. Generally, the greater distances between movable rollers and fixed rollers of the tension adjustment devices, the greater the tensioning degrees of the adjustment mechanism on the sheets to be wound, and the greater the tensions of the sheets to be wound; correspondingly, the smaller the output of the sheets to be wound, that is, the smaller the layer spacing of the electrode assemblies, the smaller the size of the electrode assemblies.

It may be understood that increasing the tensions of the sheets to be wound refers to increasing the tensions on the sheets to be wound when obtaining the first parameters and the second parameters. Specifically, since the output of the separator sheets has little influence on the parameters of the electrode assemblies, increasing the tensions of the sheets to be wound is generally to increase the tensions of the positive electrodes to be wound, or to increase the tensions of the negative electrodes to be wound, or to simultaneously increase the tensions of the positive electrodes to be wound and the tensions of the negative electrodes to be wound.

By increasing the tensions of the sheets to be wound, the purpose of decreasing the output of the sheets to be wound is achieved, so that the adjustment is convenient, and the controllability is high.

According to some embodiments of the present application, optionally, increasing output of the corresponding sheets to be wound includes: decreasing tensions of the sheets to be wound.

It may be understood that decreasing the tensions of the sheets to be wound refers to decreasing the tensions on the sheets to be wound when obtaining the first parameters and the second parameters. Specifically, since the output of the separator sheets has little influence on the parameters of the electrode assemblies, decreasing the tensions of the sheets to be wound is generally to decrease the tensions of the positive electrodes to be wound, or to decrease the tensions of the negative electrodes to be wound, or to simultaneously decrease the tensions of the positive electrodes to be wound and the tensions of the negative electrodes to be wound.

By decreasing the tensions of the sheets to be wound, the purpose of increasing the output of the sheets to be wound is achieved, so that the adjustment is convenient, and the controllability is high.

In some embodiments of the present application, optionally, increasing output of the corresponding sheets to be wound includes: rolling the sheets to be wound to form protrusions, or increasing the height of the protrusions formed by rolling the sheets to be wound.

Rolling refers to pressing the sheets to be wound by using pressing rollers, etc. The surfaces of the pressing rollers are provided with protruding portions, and the protruding portions can form protrusions on the sheets to be wound during the rolling. The protrusions refer to protruding parts of the main body plane where the sheets to be wound are located.

When the first parameters and the second parameters are obtained, if the sheets to be wound are not rolled, the driving device can be controlled to drive the pressing rollers to roll the sheets to be wound, such that the protrusions are formed on the sheets to be wound. Since the sheets formed with protrusions are thicker than the sheets without protrusions, the output of the sheets is increased.

When the first parameters and the second parameters are obtained, if the sheets to be wound are already rolled to form the protrusions, the driving device can be controlled to drive the pressing rollers to roll the sheets to be wound, with a greater acting force, such that higher protrusions are formed on the sheets to be wound. Since the thickness of the sheets with the higher protrusions is increased compared to the thickness of the sheets with the protrusions having a previous height, the output of the sheets is increased.

It should be noted that the pressing rollers are typically provided corresponding to the positive electrodes so as to form protrusions on the positive electrodes, so rolling the sheets to be wound to form the protrusions or increasing the height of the protrusions formed by rolling the sheets to be wound is typically rolling the positive electrodes to be wound so as to form protrusions or increasing the height of the protrusions formed by rolling the positive electrodes to be wound.

By rolling the sheets to be wound to form the protrusions or increasing the height of the protrusions formed by rolling the sheets to be wound, the purpose of increasing the output of the sheets to be wound by adjusting the sheet thickness or a spacing of the sheet layers is achieved, so that the winding method is relatively easy to implement and high in controllability.

According to some embodiments of the present application, optionally, the method further includes establishing a preset standard model. Establishing a preset standard model includes: simulating the winding of a sheet having a standard thickness, setting a preset parameter range and generating the preset standard model, wherein the preset parameter range is set according to the second parameter corresponding to the first parameter during the winding of the sheet having a standard thickness.

The sheet having a standard thickness includes a positive electrode, an negative electrode and a separator sheet that have an ideal thickness, and the respective thicknesses of the positive electrode, the negative electrode and the separator sheet are always consistent in a length direction. The preset standard model may be simulated by three-dimensional simulation software. The preset standard model includes correlation information between a first parameter range and a second parameter range.

Taking the first parameter as the number of winding layers and the second parameter as the sheet length as an example, establishing a preset standard model includes: simulating the winding of a sheet having a standard thickness, setting a preset sheet length range and generating the preset standard model, wherein the preset sheet length range is set on the basis of a sheet roll length corresponding to the number of winding layers during the winding of the sheet having a standard thickness.

By simulating the winding of the sheet having a standard thickness and generating the preset standard model, the electrode assemblies can be regulated and managed according to the preset standard model during the winding to improve parameter fluctuation during the winding of the electrode assemblies, thereby improving the quality of the finished electrode assemblies and the safety of batteries composed of the electrode assemblies.

According to some embodiments of the present application, optionally, the plurality of electrode assemblies are all of the same model, and the plurality of electrode assemblies correspond to one and the same preset standard model; alternatively, the plurality of electrode assemblies include at least two models of electrode assemblies, the electrode assemblies of the same model correspond to the same preset standard model, and the number of preset standard models is equal to the number of the models of the electrode assemblies.

The model is a way to distinguish the types of electrode assemblies. Different electrode assembly models generally means that electrode assemblies have different sizes.

By adopting the same preset standard model for the electrode assemblies of the same model, the better consistency of finished products after the winding of the plurality of electrode assemblies of the same model is completed can be ensured.

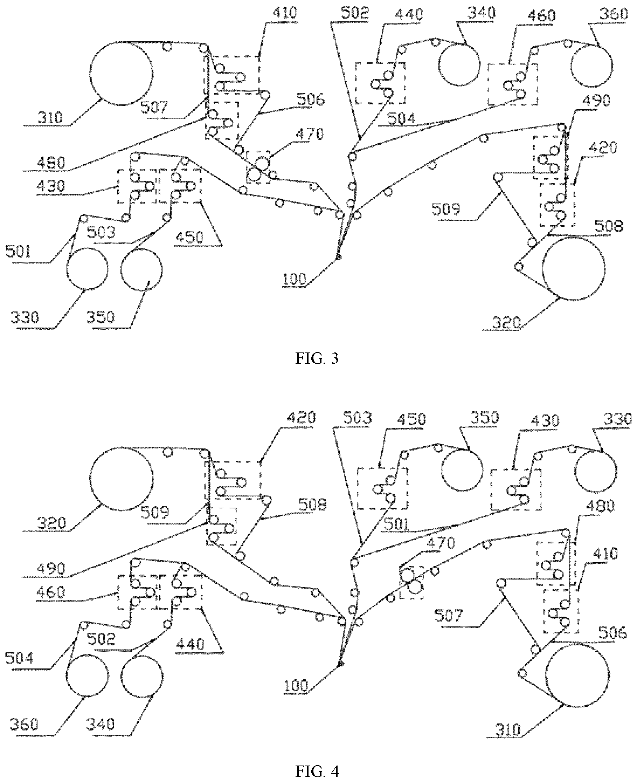

As shown in Figs. 2, 3 and 4, Fig. 2 is a schematic diagram of a winding system that winds a plurality of electrode assemblies synchronously according to some embodiments of the present application, and Fig. 3 is a schematic diagram of a winding system according to some embodiments of the present application; Fig. 4 is a schematic diagram of a winding system according to other embodiments of the present application. The difference between Fig. 3 and Fig. 4 lies in that a positive pole unwinding mechanism 310 and a negative pole unwinding mechanism 320 are different in position. According to some embodiments of the present application, the present application further provides a winding system, including: an unwinding mechanism, a winding needle 100, a plurality of adjustment mechanisms, a detection mechanism 200 and a controller. The unwinding mechanism is provided with an unwinding shaft, and the unwinding mechanism is configured to unwind sheets of a plurality of electrode assemblies. The winding needle 100 is provided with a plurality of winding positions at intervals in an axial direction, and each winding position is configured to wind an electrode assembly. The adjustment mechanisms are provided between the unwinding mechanism and the winding needle, and the plurality of adjustment mechanisms are provided corresponding to the sheets of the plurality of electrode assemblies.

The detection mechanism 200 is configured to detect winding information of each electrode assembly. The winding information includes a first parameter and a second parameter. The first parameter is any one of the number of winding layers, a sheet length and a winding roll diameter, and the second parameter is one or both of the remaining two of the number of winding layers, the sheet length and the winding roll diameter. Specifically, the detection mechanism 200 may be a CCD vision sensor, a high-precision displacement sensor and/or an encoder, etc. For the providing positions of the CCD vision sensor, the high-precision displacement sensor or the encoder as well as the detection on the winding information, the description of the winding method provided in the present application may be referred.

The controller is configured to receive the winding information, and to drive, according to the second parameter, the adjusting mechanisms to adjust the sheets to be wound of the corresponding electrode assemblies. It should be noted that the controller is specifically configured to execute the winding method in any one of the above-described embodiments provided by the present application. For the control process of the controller during the winding of the plurality of electrode assemblies, the description of the winding method in any of the above-described embodiments may be referred.

Providing the adjustment mechanism between the unwinding mechanism and the winding needle 100 means that the working process of the adjustment mechanism performing adjustment is between the working process of the unwinding mechanism performing unwinding and the working process of the winding needle 100 performing winding, that is, a processing procedure of the adjustment mechanism is between the unwinding mechanism and the winding needle 100, and an actual positional relationship of the adjustment mechanism, the unwinding mechanism and the winding needle 100 may be set according to an actual scenario.

A plurality of adjustment mechanisms are provided corresponding to the sheets of the plurality of electrode assemblies. It is possible that the positive electrode, the negative electrode and the separator sheet of each electrode assembly are respectively provided corresponding to the adjustment mechanisms, or one or two of the positive electrode, the negative electrode and the separator sheet in each electrode assembly are correspondingly provided with an adjustment mechanism; alternatively, it is possible that the positive electrode, the negative electrode and the separator sheet in one electrode assembly are respectively provided corresponding to the adjustment mechanisms, or one or two of the positive electrode, the negative electrode and the separator sheet in the other electrode assembly are correspondingly provided with an adjustment mechanism. As long as each electrode assembly is correspondingly provided with at least one adjustment mechanism.

According to the winding system of the present application, during the winding, the detection mechanism 200 obtains the first parameter and the second parameter of each electrode assembly in real time, and the controller calls the preset parameter range of the second parameter of the corresponding preset standard model on the basis of the first parameter, and compares the obtained second parameter with the preset parameter range of the corresponding preset standard model, such that the electrode assembly whose second parameter exceeds the corresponding preset parameter range can be identified in a timely manner. When the second parameter of the electrode assembly exceeds the corresponding preset parameter range, the controller drives the adjustment mechanism to adjust the sheet to be wound of the corresponding electrode assembly, such that after subsequent winding of the sheet to be wound is completed, deviation compensation can be performed on the previously wound electrode assembly, enabling all the finally obtained electrode assemblies to meet the standard requirements, and the same winding needle 100 can also simultaneously wind the plurality of electrode assemblies, thereby not only ensuring the quality of the electrode assemblies, but also improving production efficiency.

According to some embodiments of the present application, optionally, the adjustment mechanism includes a tension adjustment device for adjusting tension of the sheets to be wound.

The tension adjustment device is a component capable of adjusting the tensioning degree of the sheets to be wound. The tension adjustment device includes a tension roller set.

By providing the tension adjustment device, the tension of the corresponding sheets to be wound can be adjusted to achieve the purpose of adjusting the corresponding sheets to be wound, so that the controllability is high, and the operation is convenient.

In some embodiments of the present application, the sheets of the electrode assembly include a positive electrode, an negative electrode, and a separator sheet, and the adjustment mechanism includes a positive pole tension adjustment device, an negative pole tension adjustment device, or a separator tension adjustment device.

The positive pole tension adjustment device is a device configured to adjust the tensioning degree of the positive electrode, which is provided corresponding to the positive electrode of the electrode assembly, and the positive electrode from the positive pole unwinding mechanism 310 may be transferred to the winding needle 100 by the positive pole tension adjustment device. The positive pole tension adjustment device includes a tension roller set for adjusting the tension of the positive electrode, which is provided between the corresponding processes of the positive pole unwinding mechanism 310 and the winding needle 100. In actual provision, the positive electrode of each electrode assembly may correspond to an independent positive pole tension adjustment device, that is, the tension of the positive electrode of each electrode assembly may be adjusted separately by the corresponding positive pole tension adjustment device thereof.

The negative pole tension adjustment device is a device configured to adjust the tensioning degree of the negative electrode, which is provided corresponding to the negative electrode of the electrode assembly, and the negative electrode from the negative pole unwinding mechanism 320 may be transferred to the winding needle 100 by the negative pole tension adjustment device. The negative pole tension adjustment device includes a tension roller set for adjusting the tension of the negative electrode, which is provided between the corresponding processes of the negative pole unwinding mechanism 320 and the winding needle 100. In actual provision, the negative electrode of each electrode assembly may correspond to an independent negative pole tension adjustment device, that is, the tension of the negative electrode of each electrode assembly may be adjusted separately by the corresponding negative pole tension adjustment device thereof.

The separator tension adjustment device is a device configured to adjust the tensioning degree of the separator, which is provided corresponding to the separator of the electrode assembly. The two separator sheets of the electrode assembly may be transferred to the winding needle 100 by the two separator tension adjustment devices.

The separator tension adjustment device includes a tension roller set for adjusting the tension of the separator, which is provided between the separator unwinding mechanism and the winding needle 100. In actual provision, each separator unwinding mechanism may be provided with a corresponding separator tension adjustment device, that is, the tension of each separator may be adjusted separately by the corresponding separator tension adjustment device thereof.

In some embodiments of the present application, optionally, the adjustment mechanism includes a pressing roller 470 and a driving device, wherein a protruding portion is formed on a surface of the pressing roller 470 and is configured to roll the corresponding sheets to be wound so as to form a protrusion, and the driving device is configured to adjust the pressing roller 470 to get close to or away from the corresponding sheets to be wound.

The sheet from the unwinding mechanism is transferred to the winding needle 100 after passing through the pressing roller 470. The pressing roller 470 may be provided corresponding to the positive electrode, the negative electrode or the separator sheet. In a specific implementation, the pressing roller 470 is provided corresponding to the positive electrode, and the positive electrode from the positive pole unwinding mechanism 310 passes through the positive pole tension adjustment device and the pressing roller 470 in sequence and is then transferred to the winding needle 100. The positive electrodes of the plurality of electrode assemblies may be respectively provided with separate pressing rollers 470, that is, the pressing roller 470 of each positive electrode may be separately controlled.

The pressing roller 470 can adjust the thickness of the corresponding sheet, so as to correct the winding roll diameter of the electrode assembly, the sheet length, etc. By means of the cooperation of the driving devices and the pressing rollers 470, it is possible to form the protrusions on the sheets to be wound or change the height of the protrusions on the sheets to be wound, so that the purpose of adjusting the sheets to be wound is achieved, the controllability is high, and the operation is convenient.

Referring to Figs. 3 and 4, in some embodiments of the present application, optionally, the unwinding mechanism includes: a positive pole unwinding mechanism 310, a negative pole unwinding mechanism 320 and a plurality of separator unwinding mechanisms. The positive pole unwinding mechanism 310 is provided with a positive pole unwinding shaft, and the positive pole unwinding shaft is configured to synchronously unwind the positive electrodes corresponding to the plurality of electrode assemblies. The negative pole unwinding mechanism 320 is provided with a negative pole unwinding shaft, and the negative pole unwinding shaft is configured to synchronously unwind the negative electrodes corresponding to the plurality of electrode assemblies. The separator unwinding mechanisms are each provided with a separator unwinding shaft, and the two corresponding separator sheets of each electrode assembly are each correspondingly provided with a separator unwinding mechanism.

The positive pole unwinding mechanism 310 is a mechanism configured to place a positive electrode roll so as to release the positive electrode. The negative pole unwinding mechanism 320 is a mechanism configured to place an negative electrode roll so as to release the negative electrode roll. The separator unwinding mechanism is a mechanism configured to place a separator sheet roll so as to release the separator sheet.

The positive electrodes of the plurality of electrode assemblies are unwound by the same positive pole unwinding mechanism 310, and the negative electrodes of the plurality of electrode assemblies are unwound by the same negative pole unwinding mechanism 320, so that the equipment investment costs are reduced. Also, the two separator sheets of each electrode assembly are each unwound by the separate separator unwinding mechanism, so that the operation is highly controllable.

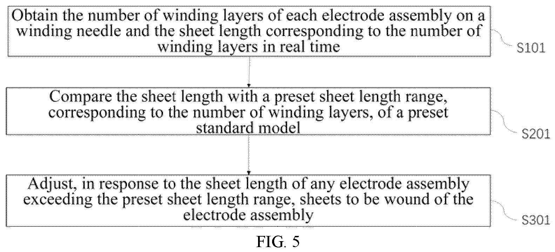

Referring to Fig. 5, Fig. 5 shows a flow chart of a winding method in some embodiments of the present application. According to some embodiments of the present application, the present application provides a winding method, which is applied in a winding system for synchronously winding a plurality of electrode assemblies. The winding method includes the following steps S101-S301.

At step S101, the number of winding layers of each electrode assembly on a winding needle and the sheet length corresponding to the number of winding layers are obtained in real time.

At step S201, the sheet length is compared with the preset sheet length range, corresponding to the number of winding layers, of the preset standard model.

At step S301, in case of the sheet length of any one electrode assembly exceeding the preset sheet length range, the sheets to be wound of the electrode assembly are adjusted.

Specifically, at step S301, if the sheet length of any one electrode assembly is greater than the upper limit of the corresponding preset sheet length range, the positive pole tension adjustment mechanism and the negative pole tension adjustment mechanism corresponding to the sheets of the electrode assembly are controlled to increase the tension of the sheets, and/or the pressing roller 470 is controlled to decrease a pressure acting on the positive electrode. If the sheet length of any one electrode assembly is less than the lower limit of the corresponding preset sheet length range, the positive pole tension adjustment mechanism and the negative pole tension adjustment mechanism corresponding to the sheets of the electrode assembly are controlled to decrease the tension of the sheets, and/or the pressing roller 470 is controlled to increase the pressure acting on the positive electrode.

For example, the number of the plurality of electrode assemblies is N, wherein N represents an integer greater than or equal to 2, and the N electrode assemblies are the first electrode assembly 101, the second electrode assembly 102, ... and the N^{th} electrode assembly 103. The N electrode assemblies are of the same model. At step S101, the number of winding layers of the first electrode assembly 101, the second electrode assembly 102, ... and the N^{th} electrode assembly 103 in the current state, as well as the sheet length corresponding to the number of winding layers are respectively obtained. The numbers of winding layers of the N electrode assemblies are calculated on the basis of the number of rotation turns of the winding needle 100, so the numbers of winding layers are the same.

Taking an example that the number of winding layers in the current state corresponds to the m^{th} layer, wherein m represents a positive integer, the sheet lengths of the first electrode assembly 101, the second electrode assembly 102, ... and the N^{th} electrode assembly 103 are compared with the preset sheet length range of the preset standard model located in the m^{th} layer. If the sheet length of a certain electrode assembly, for example, the second electrode assembly 102, is greater than the upper limit of the corresponding preset sheet length range, the positive pole tension adjustment mechanism corresponding to the second electrode assembly 102 is controlled to increase the tension of the positive electrode, and the negative pole tension adjusting mechanism is controlled to increase the tension of the negative electrode, and/or the pressing roller 470 is controlled to decrease the pressure on the positive electrode. If the sheet length of a certain electrode assembly, for example, the first electrode assembly 101, is less than the lower limit of the corresponding preset sheet length range, the positive pole tension adjustment mechanism corresponding to the sheet of the first electrode assembly 101 is controlled to decrease the tension of the positive electrode, and meanwhile the negative pole tension adjustment mechanism is controlled to decrease the tension of the negative electrode, and/or the pressing roller 470 is controlled to increase the pressure on the positive electrode.

According to some embodiments of the present application, the present application provides a winding system, the electrode assembly winding system is configured to synchronously wind N electrode assemblies, and the N electrode assemblies are respectively the first electrode assembly 101, the second electrode assembly 102, ... and the N^{th} electrode assembly 103.

The winding system includes a winding mechanism, a positive pole unwinding mechanism 310, a negative pole unwinding mechanism 320, a detection mechanism 200, a plurality of separator unwinding mechanisms and a plurality of adjustment mechanisms.

The winding mechanism is provided with a winding needle 100 thereon, and N winding positions are provided on the winding needle 100, and the N winding positions are configured to respectively wind the first electrode assembly 101, the second electrode assembly 102, ... and the N^{th} electrode assembly 103, that is, the winding needle 100 may coaxially wind N winding cores. The number of adjustment mechanisms is consistent with the number of electrode assemblies, and the number of separator unwinding mechanisms is twice the number of electrode assemblies. Each adjustment mechanism includes a positive pole tension adjustment device, an negative pole tension adjustment device and a separator tension adjustment device. Each adjustment mechanism may be provided with one or more positive pole tension adjustment devices and one or more negative pole tension adjustment devices, and the separator tension adjustment device is provided corresponding to two separator sheet rolls, so each adjustment mechanism is provided with at least two separator tension adjustment devices. Generally, one detection mechanism 200 is provided corresponding to each electrode assembly, that is, the number of detection mechanisms 200 is N. The specific detection mechanism 200 may be a sheet length calculating mechanism (such as an encoder) for measuring a sheet length or a diameter measurement device (such as a high-precision displacement sensor) for measuring a roll diameter.

Double electrode assemblies being wound synchronously is taken as an example for further description below.

The unwinding mechanism includes a positive pole unwinding mechanism 310, a negative pole unwinding mechanism 320, a first separator unwinding mechanism 330, a second separator unwinding mechanism 340, a third separator unwinding mechanism 350, and a fourth separator unwinding mechanism 360.

The tension adjustment devices are distributed between the unwinding mechanisms and the winding needle, and include a first negative pole tension adjustment device 420, a second negative pole tension adjustment device 490, a first positive pole tension adjustment device 410, a second positive pole tension adjustment device 480, a first separator tension adjustment device 430, a second separator tension adjustment device 440, a third separator tension adjustment device 450, and a third separator tension adjustment device 450. Each positive electrode is correspondingly provided with a pressing roller 470, each pressing roller 470 is composed of a pair of coaxial pressing rollers controlled separately, and the two pressing rollers 470 separately regulate a positive electrode of the first electrode assembly 101 and a positive electrode of the second electrode assembly 102.

A first separator sheet 501 and a second separator sheet 502 of the first electrode assembly 101 are unwound by the first separator unwinding mechanism 330 and the second separator unwinding mechanism 340 respectively, and then pass through the first separator tension adjustment device 430 and the second separator tension adjustment device 440 and a plurality of guide rollers respectively to enter the winding needle 100; after a third separator sheet 503 and a fourth separator sheet 504 of the second electrode assembly 102 are unwound by the third separator unwinding mechanism 350 and the fourth separator unwinding mechanism 360, and then pass through the third separator tension adjustment device 450, the fourth separator tension adjustment device 460 and a plurality of guide rollers respectively to enter the winding needle 100.

The positive pole unwinding mechanism 310 is provided coaxial with a non-slit positive electrode material roll, wherein the first positive electrode 506 and the second positive electrode 507 respectively pass through the first positive pole tension adjustment device 410 and the second positive pole tension adjustment device 480 respectively, and then enter the winding positions of the winding needle 100 by means of the pressing rollers 470 respectively; the negative pole unwinding mechanism 320 is provided coaxial with a pair of negative electrode material rolls, and the first negative electrode 508 and the second negative electrode 509 enter the winding positions respectively by passing through the first negative pole tension adjustment device 420 and the second negative pole tension adjustment device 490 at the corresponding positions.

During the winding, the first positive electrode 506, the first negative electrode 508, the first separator sheet 501 and the second separator sheet 502 are wound on the winding needle 100 to form a first electrode assembly 101 after passing through the tension adjustment devices or the pressing rollers 470 at their respective positions; the second positive electrode 507, the second negative electrode 509, the second separator sheet 503 and the fourth separator sheet 504 are wound on the winding needle 100 to form a second electrode assembly 102 after passing through the tension adjustment devices or the pressing rollers 470 at their respective positions.

One group of the above-mentioned tension adjustment devices may be provided, or a plurality of groups of the above-mentioned tension adjustment devices may be provided placed at different positions of an electrode plate winding path; the tension rollers, configured to adjust the tensions of the electrode plates, on the tension adjustment devices may be any devices, such as: slidable tension rollers, swingable tension rollers, etc.

The synchronous winding of the double electrode assemblies shown in Fig. 3 is taken as an example. During the winding, the number of winding layers of the first electrode assembly 101 and the number of winding layers of the second electrode assembly 102 are obtained in real time, and the detection mechanism 200 calculates and monitors changes in the current winding roll diameters of the first electrode assembly 101 and the second electrode assembly 102 in real time. When the winding roll diameter of the first electrode assembly 101 exceeds the preset winding roll diameter range corresponding to the preset standard model, the controller adjusts the tensions according to deviations by means of the first positive pole tension adjustment device 410, the first negative pole tension adjustment device 420, the first separator tension adjustment device 430, the second separator tension adjustment device 440 and the sheets at the pressing rollers 470 (including the first positive electrode 506, the first negative electrode 508, the first separator sheet 502 and the second separator sheet 503), or changes the depth of the protrusions on the first positive electrode 506 by adjusting the pressure of the pressing roller 470 on the first positive electrode 506. When the winding roll diameter of the second electrode assembly 102 exceeds the preset winding roll diameter range corresponding to the preset standard model, the controller adjusts the tensions by means of the second positive pole tension adjustment device 480, the second negative pole tension adjustment device 490, the third separator tension adjustment device 450, the fourth separator tension adjustment device 460 and the sheets at the pressing rollers 470 (including the second positive electrode 507, the second negative electrode 509, the third separator sheet 503 and the fourth separator sheet 504), or regulates the depth of the protrusions on the second positive electrode 507 by adjusting the pressing rollers 470.

In the entire winding process, by continuously detecting the deviation of the sheet length or the winding roll diameter of any number of winding layers, tension adjustment and rolling are performed on the electrode assemblies, such that the winding roll diameters of the first electrode assembly 101 and the second electrode assembly 102 produced by one winding are consistent and are approximate to the winding roll diameter of the preset standard model, thereby improving the thickness difference of the winding roll diameters of the two electrode assemblies caused by the thickness of the electrode plates.

The foregoing descriptions are merely some preferred and specific implementations of the present application, and are not intended to limit the scope of protection of the present application. Any changes or substitutions that can readily occur to those skilled in the art within the scope of technology disclosed in the present application should all fall within the scope of protection of the present application. Therefore, the scope of protection of the present application shall be defined by the claims.

## Claims

1. A winding method, which is used in a winding system for synchronously winding a plurality of electrode assemblies, the winding method comprising:
obtaining a first parameter and a second parameter of each electrode assembly on a winding needle in real time, the first parameter being any one of the number of winding layers, a sheet length and a winding roll diameter, and the second parameter being one or both of the remaining two of the number of winding layers, the sheet length and the winding roll diameter;
comparing the second parameters respectively with corresponding preset parameter ranges, the preset parameter ranges being the ranges of the second parameters corresponding to the first parameters of preset standard models corresponding to the electrode assemblies; and
adjusting, in response to the second parameter exceeding the corresponding preset parameter range, sheets to be wound of the corresponding electrode assembly.

2. The winding method according to claim 1, wherein the first parameter is the number of winding layers, and the second parameter is the sheet length or the winding roll diameter; or, the first parameter is the sheet length, and the second parameter is the winding roll diameter or the number of winding layers;
the step of adjusting, in response to the second parameter exceeding the corresponding preset parameter range, sheets to be wound of the corresponding electrode assembly comprises:
decreasing output of the corresponding sheets to be wound in response to the second parameter being greater than an upper limit of the corresponding preset parameter range; and
increasing output of the corresponding sheets to be wound in response to the second parameter being less than a lower limit of the corresponding preset parameter range.

3. The winding method according to claim 1, wherein the first parameter is the winding roll diameter, and the second parameter is the sheet length or the number of winding layers;
the step of adjusting, in response to the second parameter exceeding the corresponding preset parameter range, sheets to be wound of the corresponding electrode assembly comprises:
increasing output of the corresponding sheets to be wound in response to the second parameter being greater than an upper limit of the corresponding preset parameter range; and
decreasing output of the corresponding sheets to be wound in response to the second parameter being less than a lower limit of the corresponding preset parameter range.

4. The winding method according to claim 2 or 3, wherein decreasing output of the corresponding sheets to be wound comprises: increasing tension of the sheets to be wound.

5. The winding method according to any one of claims 2-4, wherein increasing output of the corresponding sheets to be wound comprises: decreasing tension of the sheets to be wound.

6. The winding method according to any one of claims 2-5, wherein increasing output of the corresponding sheets to be wound comprises: rolling the sheets to be wound to form protrusions, or increasing the height of the protrusions formed by rolling the sheets to be wound.

7. The winding method according to any one of claims 1-6, wherein the winding method further comprises establishing a preset standard model, and establishing a preset standard model comprises:
simulating the winding of a sheet having a standard thickness, setting a preset parameter range and generating the preset standard model, the preset parameter range being set according to the second parameter corresponding to the first parameter during the winding of the sheet having a standard thickness.

8. The winding method according to any one of claims 1-7, wherein:
the plurality of electrode assemblies are all of the same model, and the plurality of electrode assemblies correspond to one and the same preset standard model; or
the plurality of electrode assemblies comprise at least two models of electrode assemblies, the electrode assemblies of the same model correspond to the same preset standard model, and the number of preset standard models is equal to the number of the models of the electrode assemblies.

9. A winding system for winding a plurality of electrode assemblies, the winding system comprising:
an unwinding mechanism, configured to unwind sheets of the plurality of electrode assemblies;
a winding needle, provided with a plurality of winding positions at intervals in an axial direction, and each winding position being configured to wind an electrode assembly;
a plurality of adjustment mechanisms, the adjustment mechanisms being provided between the unwinding mechanism and the winding needle, and the plurality of adjustment mechanisms being provided corresponding to the sheets of the plurality of electrode assemblies;
a detection mechanism, configured to detect winding information of each electrode assembly during the winding, the winding information comprising a first parameter and a second parameter, the first parameter being any one of the number of winding layers, a sheet length and a winding roll diameter, and the second parameter being one or both of the remaining two of the number of winding layers, the sheet length and the winding roll diameter; and
a controller, configured to receive the winding information, and to drive, according to the second parameter, the adjusting mechanisms to adjust the sheets to be wound of the corresponding electrode assemblies.

10. The winding system according to claim 9, wherein the adjustment mechanism comprises a tension adjustment device for adjusting tension of the sheets to be wound.

11. The winding system according to claim 10, wherein the sheets of the electrode assembly comprise a positive electrode, an negative electrode and a separator sheet, and the adjustment mechanism comprises a positive pole tension adjustment device, an negative pole tension adjustment device, or a separator tension adjustment device.

12. The winding system according to any one of claims 9-11, wherein:
the adjustment mechanism comprises a pressing roller and a driving device;
a protruding portion is formed on a surface of the pressing roller and configured to roll the corresponding sheet to be wound so as to form a protrusion; and
the driving device is configured to adjust the pressing roller to get close to or away from the corresponding sheet to be wound.

13. The winding system according to any one of claims 9-12, wherein the unwinding mechanism comprises:
a positive pole unwinding mechanism, provided with a positive pole unwinding shaft, and the positive pole unwinding shaft being configured to synchronously unwind positive electrodes corresponding to the plurality of electrode assemblies;
a negative pole unwinding mechanism, provided with a negative pole unwinding shaft, and the negative pole unwinding shaft being configured to synchronously unwind negative electrodes corresponding to the plurality of electrode assemblies; and
a plurality of separator unwinding mechanisms, each separator unwinding mechanism being provided with a separator unwinding shaft, and the two corresponding separator sheets of each electrode assembly being each correspondingly provided with the separator unwinding mechanism.
